# EUROPEAN PATENT SPECIFICATION

(11) **EP 0 990 943 B1**
(45) Date of publication and mention of the grant of the patent: **22.08.2007**
(21) Application number: 98307996.3
(22) Date of filing: 01.10.1998
(51) Int. Cl.: G02F 1/137

(54) **An improved liquid crystal display device**
Flüssigkristall-Anzeigevorrichtung
Dispositif d'affichage à cristal liquide

(43) Date of publication of application: 05.04.2000
(73) Proprietor: Centre for Liquid Crystal Research, Bangalore-560 013, Karnataka (IN)
(72) Inventor: Chandrasekhar, Sivaramakrishna, Bangalore-560 013, Karnataka (IN); Krishna Prasad, Subbarao, Bangalore-560 013, Karnataka (IN); Gopinathan Nair, Geetha, Bangalore-560 013, Karnataka (IN); Sreenivasamurthy Shankar Rao, Doddamane, Bangalore-560 013, Karnataka (IN); Kumar, Sandeep, Bangalore-560 013, Karnataka (IN); Manickam, Mayandithevar, Bangalore-560 013, Karnataka (IN)
(74) Representative: Walsh, David Patrick

(56) References cited:
- EP-A- 0 030 879
- EP-A- 0 093 035
- HEPPKE G.: 'Bend and Splay Elastic Constant ...' MOL. CRYST.LIQ. CRYST. LETTERS vol. 8, no. 1, 1991, pages 17 - 25
- HEPPKE G. ET AL: 'ELECTROOPTIC EFFECT IN A NON-POLAR NEMATIC DISCOTIC LIQUID CRYSTAL' MOLECULAR CRYSTALS AND LIQUID CRYSTALS vol. 6, no. 3, 01 December 1988, READING, GB, pages 71 - 79, XP000005938

## Description

### FIELD OF THE INVENTION

This invention relates to an improved Liquid Crystal Display (LCD) device which is used many electronic systems such as photoconducting system, ferroelectries, light emitting diodes, photovoltaic solar cell, optical data storage devices and hybrid computer chips for molecular electronics.

### BACKGROUND OF THE INVENTION

The Liquid Crystal Device industry is currently a multi-billion dollar industry. In this industry, the products range from simple watch displays to flat panel colour TV screens. The device described in the present invention has advantages over the conventional LCD devices in that it has a wide and symmetrical viewing angle, no reversal of the contrast ratio in any direction, and also results in a simplification of the fabrication process. Accordingly, the device of the present invention will be very useful for various applications in liquid crystal industry.

When molecular crystals are heated to their melting point, they usually change into the liquid phase. The periodic structure of the lattice as well as the orientational ordering of the molecules are destroyed simultaneously. However, if the constituent molecules have a pronounced anisotropy of shape, such as a rod or a disc, the melting of the lattice may precede the disappearance of the orientational ordering. One, then, has an intermediate phase composed of molecules which are more or less parallel to each other, but at the same time exhibiting a certain degree of fluidity. The molecules can slide over on one another while still preserving their parallelism. The fluid is, therefore, anisotropic, turbid and, like a crystal, shows optical birefringence and dielectric anisotropy. At a higher temperature there is orientational melting and the anisotropic fluid transforms into the ordinary isotropic clear liquid. Such intermediate phases, which occur as a result of heating or cooling, are referred to as thermotropic liquid crystals

Thermotropic liquid crystals can be classified broadly into two types, (i) those composed of rod-shaped molecules (called "calamitic" liquid crystals) which are known from the end of 19th century and form the majority of the currently known liquid crystals and (ii) those composed of disc-shaped molecules (called "discotic" liquid crystals) which have been developed recently.

### PRIOR ART REFERENCES

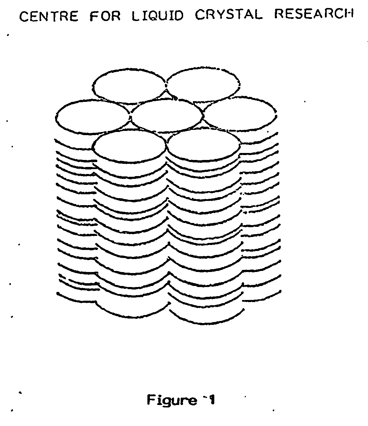

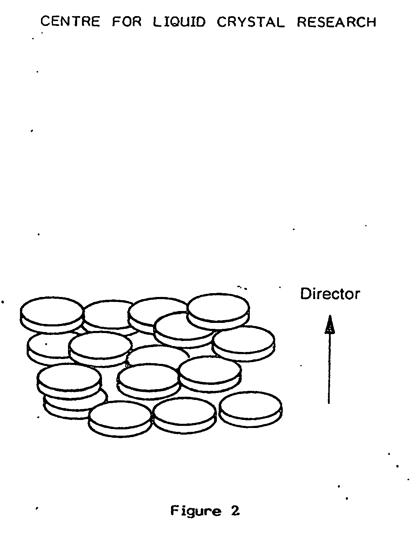

Discotic liquid crystals which were discovered by us as recently as 1977 represent a new class of theremotropic liquid crystal. In this context, reference may be made to the publication of S.Chandrasekhar, B.K.Sadashiva and K.A.Suresh; Pramana, 9, 471-480 (1977). In this case, the discs are stacked one on top of the other to form columns, the different columns constituting a two-dimensional lattice. The basic columnar structure is shown in figure 1 of the drawings accompanying this specification. A number of modifications of the above said basic structure have been identified. Some discotic compounds exhibit a nematic (N_{D}) phase as well. It is a fluid phase consisting of an orientationally ordered arrangement of discs, but with no long range translational order, somewhat like a pile of coins as shown in figure 2 of the drawings accompanying this specification. However, unlike the usual nematic calamitic, the nematic discotic is optically negative. The preferred orientation of the axis of the disc is termed as the director as shown in figure 2 of the drawings.

The advent of discotic liquid crystals triggered off a spate of activity in this field and well over a thousand discotic compounds have been reported to date. A few discotic compounds are exemplified below: Hexaalkonoyloxy benzenes, hexaalkoxy triphenylenes, bis-(4-n-decylbenzoyl)methanato copper (II), hexa-n-alkanoates of truxene and octasubstituted phthalocyanines.

The potential uses of such materials are as quasi-one-dimensional conductors, photoconducting systems, ferroelectrics, light emitting diodes, photovoltaic solar cells, optical data storage devices and hybrid computer chips for molecular electronics.

Display devices based on calamitic liquid crystals are well known. A widely used device is the twisted nematic (TN) display device. In a twisted nematic display device, two transparent glass plates are coated on their inner surfaces with a thin layer of transparent electrically conducting material, such as indium tin oxide, and further with a thin layer of a polyimide. The method of unidirectionally rubbing the said substrates with cotton or rayon or nylon fabric is widely used to achieve a macroscopic orientation of the liquid crystal director. The two glass plates are held apart at a distance of approximately 6-10µm by means of spacers to form a cell, with the rubbing directions of the polyimide layers orthogonal to each other. The gap between the substrates of the cell is filled with a calamitic nematic liquid crystal. Owing to the boundary conditions, the nematic liquid crystal will become oriented parallel to the rubbing direction of each glass plate and consequently the director will undergo a twist of 90° over the nematic layer distance. Polarizer sheets are attached to the outer surfaces of the glass plates with the axis of vibration (polarizing axis) of each sheet parallel to the rubbing direction of the plate to which it is attached. Unpolarized light is transformed into linearly polarized light by the polarizer fixed on the entrance side of the cell and emerges on the exit side with the polarization axis rotated through 90°. The emergent light will be transmitted by the second polarizer. Thus, in this configuration, the so called normally white mode, the display appears bright in the unactivated state. A white mode with enhanced viewing angle can be achieved by setting the polarizers with their polarizing axes perpendicular to the rubbing directions. The application of an electric field normal to the layer orients the liquid crystal molecules (of positive dielectric anisotropy, A Δ ε>0) with their long axes along the layer normal. In this activated state, the polarization axis of light is not rotated by the liquid crystalline medium and the display appears black. Orientation of one polarizer parallel and the second polarizer perpendicular to the rubbing direction results in a black appearance in the unactivated state and a bright appearance in the activated state. This so called black mode is useful for automobile dash board applications.

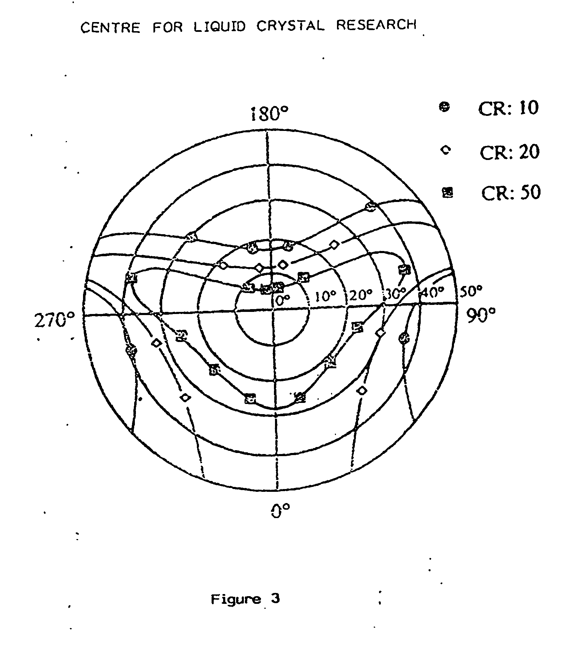

The major disadvantage of the above type of device is that when it is viewed obliquely, the viewing angle characteristic is poor, resulting in a loss of contrast, and even contrast inversion at certain azimuthal angles. See figure 3 of the drawings, which is taken from the publication of Y.Toko, T.Sugiyama, K.Katoh, Y.Imura and S.Kobayashi, J. Appl. Phys., 74, 2071-75 (1993) showing a typical polar plot of the contrast ratio (CR) for a conventional TN device.

Another widely used device is the supertwisted nematic (STN) device. The construction of such a device is similar to that of a TN device as explained above except that the twist angle of the director is between 180° and 270°, instead of 90°. The higher twist angle is achieved by incorporating a suitable quantity of a chiral compound as a dopant in the nematic material before it is filled into the cell. However, this device does not lead to any improvement in the viewing angle characteristic.

Both the TN and STN devices suffer from the additional disadvantage that for multiplexed displays there is a large difference in the pixel capacitance between the ON and OFF states, which gives rise to the problem of cross talk between pixels.

The viewing angle profiles, the symmetry and the angle dependence of the intensity contrast ratio between the ON and OFF states of any display device are important criteria for determining the quality of performance of the device. Several attempts have been made to enhance the performance of such devices. These attempts are directed mainly to improve the viewing angle characteristics using different techniques such as dividing each pixel into sub-pixels, adding retardation films, applying an electric field parallel to the substrate plane. The noteworthy point in all these attempts is the fact that the liquid crystalline material used is of the nematic calamitic type. No attempts have been made to date employing nematic discotic material for fabricating a display device.

For example, regarding the modification based on applying an electric field parallel to the plane of the substrates reference may be made to the publications of G. Baur, R. Kiefer, H. Klausmann and F. Windscheid, Liquid Crystal Today, 5, 13-14 (1995); M.Oh-e, M. Yoneya and K. Kondo, J. Appl. Phys., 82,528-535 (1997); S.H. Lee, H.Y. Kim, I.C. Park, B.G. Rho, J.S. Park, H.S. Park and C. H. Lee, Appl. Phys. Lett., 71, 2851-2853, (1997). In this method, the authors have improved the viewing angle characteristic of liquid crystal devices by employing in-plane electrodes on only one of the substrates and by avoiding the assymmetry of the director profile.

In the publications of H. Mori, Jpn. J. Appl. Phys., 36, 1068-1072 (1997); H. Mori, Yoji Itoh, Yosuke Nishiura, Taku Nakamura, Yukio Shinagawa, Jpn. J. Appl. Phys., 36, 143-147 (1997) an optical compensator with negative birefringence was introduced to reduce the amount of light leakage in the dark state.

In the publications of K. H. Yang, Jpn. J. Appl. Phys., 31, L1603-1605 (1992) and J. Chen, P. J. Bos, D.R. Bryant, D. L. Johnson, S.H.Jamal, J.R. Kelly, SID 95 Digest, 865-868 (1995) the authors have employed multiple domains of the liquid crystals in which the orientation of the director was different in each of the domains (pixels).

The devices fabricated as mentioned above do not improve the viewing angle characteristics of the device satisfactorily. Further they also involve additional steps in the fabrication process.

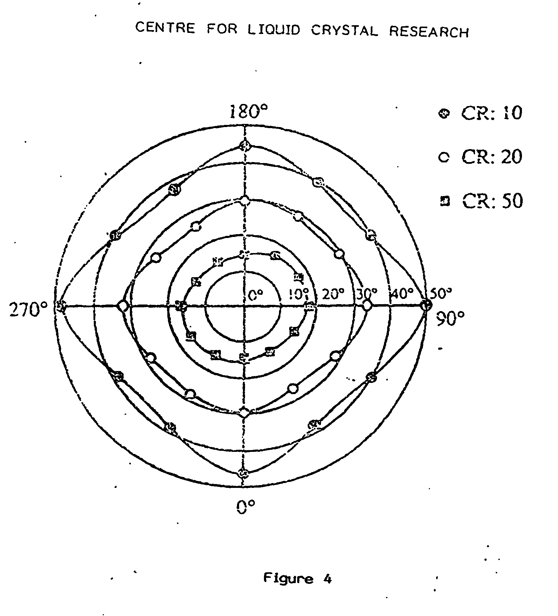

In the publications of Y. Toko, T. Sugiyama, K. Katoh, Y. Limura and S. Kobayashi, SID 93 Digest, 622-625 (1993); J. Appl. Phys., 74, 2071-75 (1993) a simpler process for producing LCD having improved viewing angle characteristic has been disclosed. In this process,polymer films are coated on the transparent conducting substrates, but no rubbing is done. The non-rubbed polymer film is optically and structurally isotropic and the director is parallel to the surfaces of the substrates but randomly oriented in the plane of the substrate in the OFF state. In the ON state, the director is normal to the surfaces of the substrates. This so called amorphous TN device gives an improved viewing angle characteristic, free from contrast inversion. See figure 4 of the drawings, which is taken from the publication of Toko et.al. referred to above. It is to be noted that the liquid crystal material used in this device is again of the nematic calamitic type and not of the nematic discotic type.

Recognising the importance of improving the viewing angle characteristics of liquid crystal devices we undertook intensive research work in this direction. Our sustained research work resulted in our finding that if nematic discotic materials are employed in liquid crystal devices the viewing angle characteristics of such devices can be further enhanced.

### OBJECTS OF THE INVENTION

Therefore, the main object of the present invention is to provide a liquid crystal device having improved viewing angle characteristics employing nematic discotic material.

Another preferred aim of this invention is to provide a liquid crystal device having no reversal of the contrast ratio in any direction.

Yet another preferred aim of the present invention is to provide a liquid crystal device with reduced difference in the pixel capacitance between the ON and the OFF states resulting in lowering of the cross talks substantially in the case of a multiplexed display device.

Still another preferred aim of the present invention is to provide a liquid crystal device employing a simple fabrication process.

### SUMMARY OF THE INVENTION

To meet the above aims, the invention, for the first time, provides a Liquid Crystal Device comprising nematic discotic material.

### DETAILED DESCRIPTION OF THE INVENTION

The present invention differs from any of the previously disclosed LCDs in that it employs a nematic discotic material and dos not use a calamitic material. To date a nematic discotic material has never been used for the fabrication of a liquid crystal display device. The material used is of negative dielectric anisotropy (Δε < O).

Accordingly, the present invention provides a Liquid Crystal Display Device as recited in claim 1.

The cell may be placed between a pair of crossed polarizers.

The substrates employed in the device may be made of glass, plastic or other such transparent materials. The electrically conducting materials such as Indium Tin Oxide, Tin Oxide etc. may be employed for coating the substrates. The resulting substrates may be preferably coated with an additional layer of polymer so as to make the contact between the nematic discotic material and the substrate uniform. The polymer when employed may be selected from the class polymers such as polyimides, polyamides, polyvinyl alcohol or a similar class of polymers. The gap between the substrates in the cell is preferably defined by means of spacers which may be selected from polyethyleneterephthalate films, polyimide films, glass microspheres etc. The use of polarizers can be avoided by incorporating a suitable quantity of known discotic pleochroic dye as a dopant in the nematic discotic material before filling the cell. For this purpose, dyes such as derivatives of anthraquinone, phthalocyanine, porphyrin etc. may be employed.

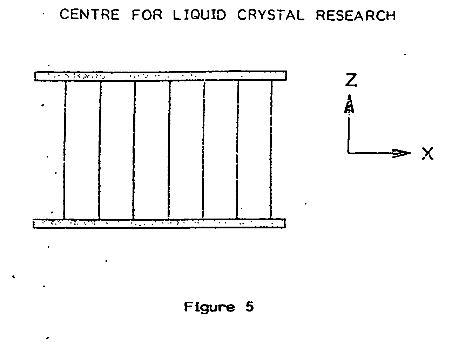

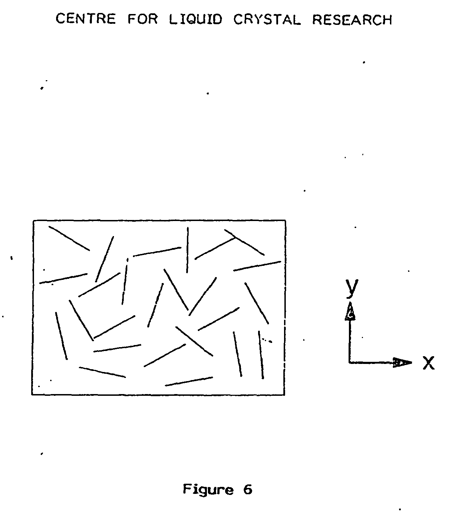

The nematic discotic material is sandwiched between the substrates. The disc-shaped molecules adhere flat against the coated surfaces of the substrates. As a result, the nematic discotic material is preferably uniformly oriented with the director perpendicular to the surface (ie along the z direction in figure 5 of the drawings). On application of an electric field along the z direction, the director in the material is realigned parallel to the surfaces of the substrates with random orientation of the director in the x-y plane (figure 6 of the drawings). Thus, between crossed polarizers there is a transition from a dark to a bright state when the field is switched ON.

The device can also be used in the reflecting mode. For such an application an optical reflector may be incorporated at the bottom surface of the display device.

The nematic discotic material employed in the device of the present invention may be selected from any substance having negative dielectric anisotropy such as hexakis ((4-nonylphenyl)ethynyl)benzene for example of the formula shown in Figure 7 of the drawings, undecenyl, pentakis[(4-pentylphenyl)ethynyl]phenyl ether for example of the formula shown in figure 8 of the drawings, and ∝, ω-bis [penta(4-pentylphenylethynyl)phenoxy]phenoxy]alkane for example of the formula shown in figure 9 of the drawings, and derivatives of triphenylene for example of the formulae shown in figures 10(a) and (b) of the drawings.

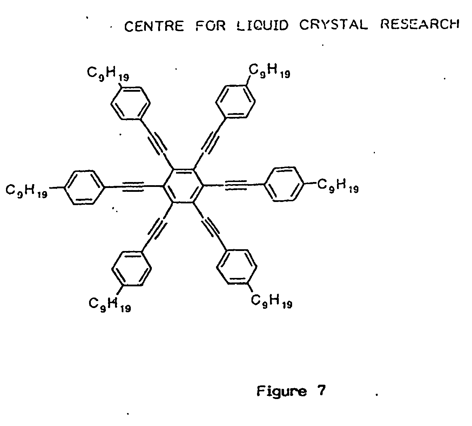

The compound of the formula shown in figure 7 exhibits the following sequence of transitions [B.Kohne and K.Praefcke, Chimia, 41, 196-198 (1987); G.Heppke, A.Ranft and B.Sabaschus, Mol. Cryst. Liq. Cryst. Lett., 8, 17-25 (1991)]

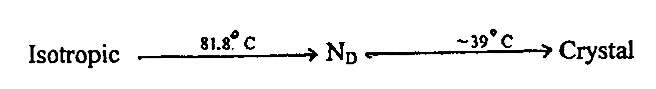

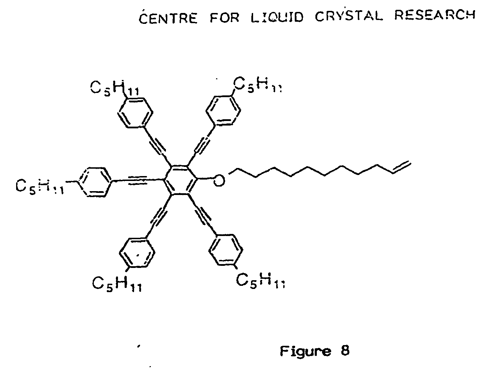

The compound of the formula shown in figure 8 has the following sequence of transitions [K.Praefcke, B.Kohne, B.Gündogan, D.Singer, D.Demus, S.Diele, G.Pelzl and U.Bakowsky, Mol. Cryst. Liq. Cryst., 198, 393-405 (1991)]

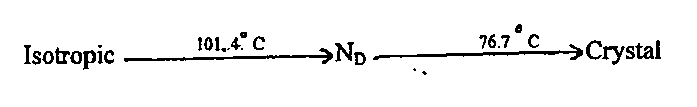

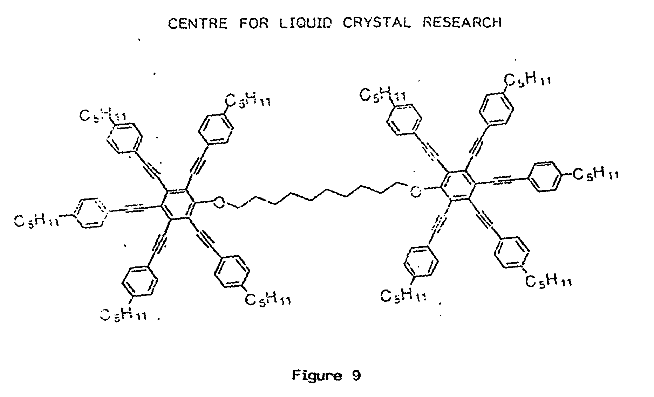

The compound of the formula shown in figure 9 has the following sequence of transitions [K.Praefcke, B.Kohne, B.Gündogan, D.Singer, D.Demus, S.Diele, G.Pelzl and U.Bakowsky, Mol. Cryst. Liq. Cryst., 198, 393-405 (1991)]

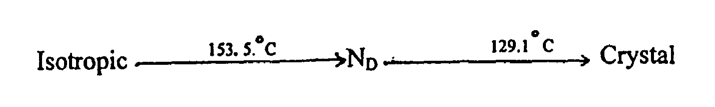

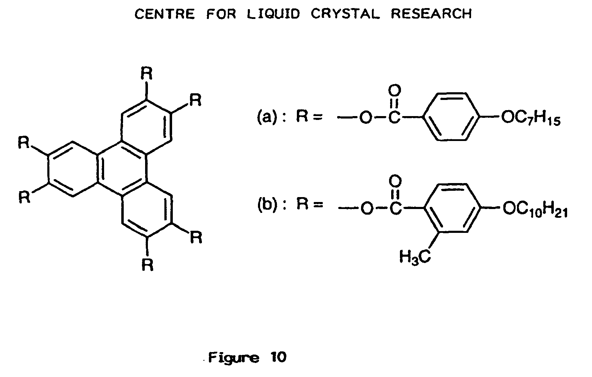

The compounds of the formulas shown in figure 10 have the following sequence of transitions [T. J. Phillips, J.C.Jones and D.C.McDonnell, Liquid Crystals, 15, 203-215. (1993)]
(a) 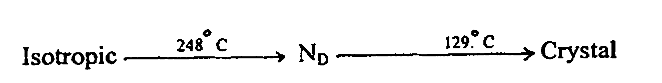
(b)

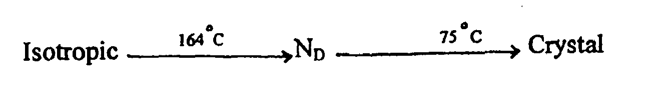

The device of the present invention can be fabricated as per the details given below. Suitable substrates transparent in the visible region of spectrum are selected. On these substrates, a coating of transparent electrically conducting material is applied. If necessary, an additional coating of a polymer may be applied to enhance the uniform adhesion of the nematic discotic material to the substrates. A spacer material to fix the spacing between the substrates is used on the non-electrically active areas of the substrates. The gap between the two substrates is filled with the required amount of nematic discotic material to form a cell. This is effected by heating the cell, during the process of filling, to a temperature above the nematic-isotropic point, and then cooling it till the material transforms to the nematic phase. The nematic discotic is then spontaneously aligned with the disc-like molecules adhering flat against the surfaces, or, equivalently, with the director normal to the surfaces (figure 5). Since the ND material is of negative dielectric anisotropy, the application of a sufficiently strong electric field, greater than a threshold value, results in the directors to be aligned parallel to the surfaces of the substrates but randomly oriented in the x-y plane (figure 6). Thus, between crossed polarizers there is a transition from the dark to the bright state when the electric field is switched ON. Because of the anchoring of the molecules at the boundary layers, the material returns to the original configuration in the OFF state.

In one embodiment, an optical reflector is provided at the bottom surface of the device for its use in a reflective mode.

A liquid crystal display device was fabricated as explained above using hexakis ((4-nonylphenyl)ethynyl)benzene (of negative dielectric anisotropy Δε = -0.18). The cell gap measured interferometrically was 2.6µm. A voltage of 10 Vᵣₘₛ 1kHz sinewave pulse of 5 seconds duration with a repetition rate of 0.1 s⁻¹ was applied.

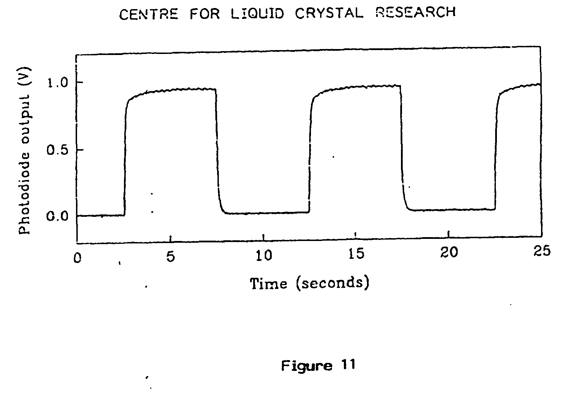

When the device is switched ON by applying the electric field, the time taken for the transmitted intensity to rise from 10% to 90% of the maximum intensity is ~100 ms and that from 10% to 80% of the maximum intensity is -50 ms. A typical electro-optic response curve obtained employing the above said device is shown in figure 11 of the drawings.

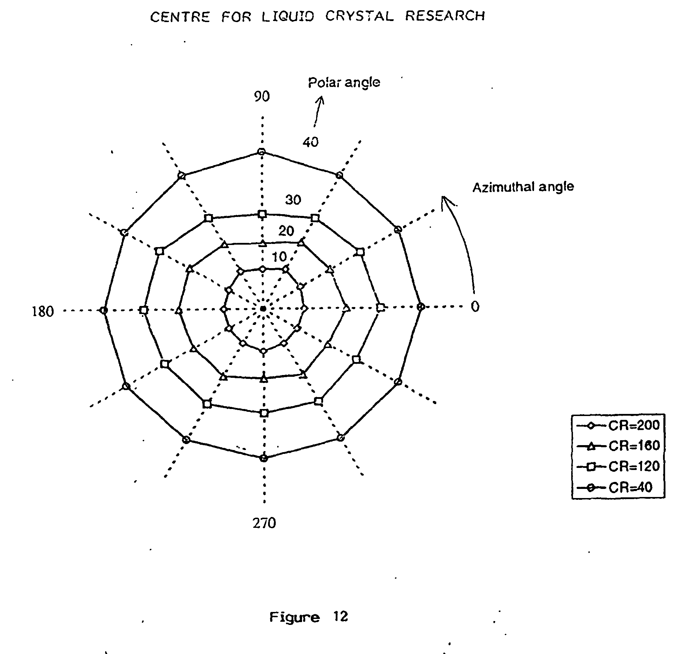

The polar plot of the contrast ratio between the intensities in the ON to OFF states is given in figure 12 of the drawings. This figure reflects that the device of the present invention shows very good contrast ratios, the contours of equal contrast ratios being nearly concentric circles and free from contrast inversion.

### ADVANTAGES OF THE PRESENT INVENTION

1. The invention, for the first time, employs nematic discotic material for the fabrication of a liquid crystal display device.
2. The device of the present invention overcomes the disadvantages of conventional TN and STN devices which employ nematic calamitic materials.
3. The viewing angle characteristic of the device of the present invention is wide and symmetric thereby improving the performance of the device.
4. The difference in the pixel capacitance between the ON and OFF states for the nematic discotic is less than that obtained for the conventional TN and STN devices which use calamitic liquid crystals, thus reducing cross talk problems in multiplexed displays.
5. The fabrication of the device of the present invention is simplified as the step involving rubbing of the polymer is avoided.
6. The requirement of coating of the substrates by a polymer can also be avoided by employing substrates having optically flat surfaces, thereby further simplifying the process of fabricating the device.
7. The use of polarizers can also be avoided by incorporating discotic pleochroic dyes in the nematic discotic material thereby making the device economical to fabricate.

## Claims

1. A Liquid Crystal display Device which comprises a pair of transparent unrubbed substrates, each substrate having a transparent electrically conducting material serving as electrode coated on one of its surfaces, **characterized by** a nematic discotic material having negative dielectric anisotropy being sandwiched between the coated surfaces of said substrates and adhering flat and uniformly against the coated surfaces of the substrate facilitating uniform orientation of the axes of the discs of the nematic discotic material which is perpendicular to the surfaces, thereby forming a cell.

2. A device as claimed in claim 1, wherein a material such as glass, plastic or other such transparent material is employed as substrate.

3. A device as claimed in claim 1 or 2, wherein a material such as Indium Tin Oxide or Tin Oxide is employed as the electrically conducting material for coating the substrates.

4. A device as claimed in claim 1, 2 or 3, wherein the resulting substrates are coated with an additional layer of unrubbed polymer so as to make the contact of the material with the substrate uniform.

5. A device as claimed in any preceding claim, wherein the polymer is selected from a group such as polyimides, polyamides, polyvinyl alcohol or a similar class of polymer.

6. A device as claimed in any preceding claim, wherein the substrates are spaced apart by spacers such as polyethyleneterephthalate films, polyimide films or glass microspheres.

7. A device as claimed in any preceding claim, wherein the nematic discotic material employed is selected from any substance having negative dielectric anisotropy such as hexakis ((4-nonylphenyl)ethyl)benzene of the formula shown in Figure 7, undecenyl pentakis [4-pentylphenyl)ethyl]phenyl ether of the formula shown in Figure 8, α, ω-bis[penta(4-pentylphenylethynyl)phenoxy]alkane having the formula as shown in figure 9 and hexasubstituted triphenylene wherein the substituent is

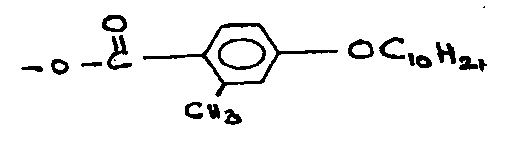

8. A device as claimed in any preceding claim, wherein an optical reflector is provided at the bottom surface of the device for its use in a reflective mode.

9. A device as claimed in any preceding claim, wherein a discotic pleochroic dye such as derivatives of anthraquinone, phthalocyanine or porphyrin is incorporated in the nematic discotic material thus eliminating the need for polarizers.

10. A device as claimed in claim 1, wherein the cell is placed between a pair of crossed polarizers.

## Patentansprüche

1. Flüssigkristallanzeigevorrichtung, die ein Paar transparenter, nicht-geriebener Substrate aufweist, wobei jedes Substrat ein transparentes, elektrisch leitendes Material aufweist, das als Elektrode dient und auf eine seiner Oberflächen aufbeschichtet ist, **gekennzeichnet durch** ein nematisch-discotisches Material mit negativer dielektrischer Anisotropie, das zwischen den beschichteten Oberflächen der Substrate angeordnet ist und flach und gleichmäßig an den beschichteten Oberflächen des Substrats anhaftet, wodurch eine einheitliche Ausrichtung der Achsen der Scheiben des nematisch-discotischen Materials unterstützt wird, das senkrecht zu den Oberflächen verläuft, wodurch eine Zelle gebildet wird.

2. Vorrichtung nach Anspruch 1, wobei ein Material wie zum Beispiel Glas, Kunststoff oder ein anderes derartiges transparentes Material als Substrat verwendet wird.

3. Vorrichtung nach Anspruch 1 oder 2, wobei ein Material wie zum Beispiel Indium-Zinn-Oxid oder Zinnoxid als das elektrisch leitende Material zum Beschichten der Substrate verwendet wird.

4. Vorrichtung nach Anspruch 1, 2 oder 3, wobei die resultierenden Substrate mit einer zusätzlichen Schicht eines nicht-geriebenen Polymers beschichtet sind, um den Kontakt des Materials mit dem Substrat gleichmäßig zu machen.

5. Vorrichtung nach einem der vorangehenden Ansprüche, wobei das Polymer aus einer Gruppe wie zum Beispiel Polyimiden, Polyamiden, Polyvinylalkohol oder einer ähnlichen Klasse von Polymeren ausgewählt ist.

6. Vorrichtung nach einem der vorangehenden Ansprüche, wobei die Substrate mittels Abstandshaltern wie zum Beispiel Polyethylenterephthalatfilmen, Polyimidfilmen und Glasmikrokugeln voneinander beabstandet sind.

7. Vorrichtung nach einem der vorangehenden Ansprüche, wobei das verwendete nematisch-discotische Material unter jeglichen Substanzen ausgewählt ist, die negative dielektrische Anisotropie aufweisen, wie zum Beispiel Hexakis((4-nonylphenyl)ethynyl)benzen mit der in Figur 7 gezeigten Formel, Undecenylpentakis[(4-pentylphenyl)ethynyl]phenylether mit der in Figur 8 gezeigten Formel, α,ω-bis[penta(4-pentylphenylethynyl)phenoxy]alkan mit der in Figur 9 gezeigten Formel sowie hexasubstituiertes Triphenylen, wobei der Substituent 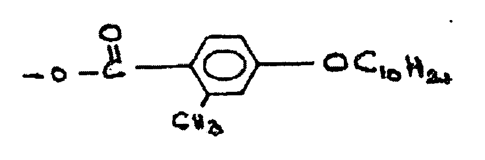 ist.

8. Vorrichtung nach einem der vorangehenden Ansprüche, wobei ein optischer Reflektor an der Unterseite der Vorrichtung für deren Verwendung in einem Reflexionsmodus angeordnet ist.

9. Vorrichtung nach einem der vorangehenden Ansprüche, wobei ein discotisch-pleochroischer Farbstoff wie zum Beispiel Derivative von Anthraquinon, Phthalocyanin und Porphyrin, in das nematisch-discotische Material eingearbeitet ist, wodurch die Notwendigkeit von Polarisatoren beseitigt wird.

10. Vorrichtung nach Anspruch 1, wobei die Zelle zwischen einem Paar gekreuzter Polarisatoren angeordnet ist.

## Revendications

1. Dispositif d'affichage à cristaux liquides qui comprend une paire de substrats transparents non poncés, chaque substrat ayant un matériau transparent électriquement conducteur servant d'électrode déposé sur l'une de ses surfaces, **caractérisé en ce qu'**un matériau nématique discotique présentant une anisotropie diélectrique négative est intercalé entre les surfaces recouvertes desdits substrats et adhère de façon plane et uniforme aux surfaces recouvertes des substrats, facilitant l'orientation uniforme des axes des disques du matériau nématique discotique qui est perpendiculaire aux surfaces, formant ainsi une cellule.

2. Dispositif selon la revendication 1, dans lequel un matériau tel que du verre, du plastique ou un autre tel matériau transparent est employé comme substrat.

3. Dispositif selon la revendication 1 ou 2, dans lequel un matériau tel que l'oxyde d'indium et d'étain ou l'oxyde d'étain est employé comme matériau électriquement conducteur pour recouvrir les substrats.

4. Dispositif selon la revendication 1, 2 ou 3, dans lequel les substrats résultants sont recouverts d'une couche supplémentaire de polymère non poncé de manière à rendre le contact entre le matériau et les substrats uniforme.

5. Dispositif selon l'une quelconque des revendications précédentes, dans lequel le polymère est choisi dans le groupe des polyimides, polyamides, alcools polyvinyliques, ou une classe similaire de polymères.

6. Dispositif selon l'une quelconque des revendications précédentes, dans lequel les substrats sont espacés par des entretoises telles que des films de téréphtalate de polyéthylène, des films de polyimide ou des microsphères de verre.

7. Dispositif selon l'une quelconque des revendications précédentes, dans lequel le matériau nématique discotique employé est choisi parmi toutes les substances présentant une anisotropie diélectrique négative telles que l'hexakis[(4-nonylphényl)éthyl]benzène répondant à la formule présentée sur la figure 7, l'éther undécényl-pentakis[(4-pentylphényl)éthyl]phénylique répondant à la formule présentée sur la figure 8, un α,ω-bis[penta(4-pentylphényléthynyl)phénoxy]-alcane répondant à la formule présentée sur la figure 9 ou un triphénylène hexasubstitué dans lequel le substituant est

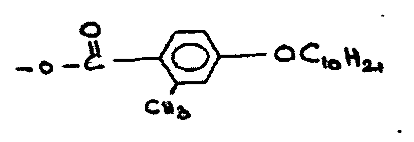

8. Dispositif selon l'une quelconque des revendications précédentes, dans lequel un réflecteur optique est fourni au niveau de la surface inférieure du dispositif pour son utilisation dans un mode réflectif.

9. Dispositif selon l'une quelconque des revendications précédentes, dans lequel un colorant pléochroïque discotique tel que les dérivés d'anthraquinone, de phtalocyanine ou de porphyrine est incorporé dans le matériau nématique discotique, supprimant ainsi le besoin de polariseurs.

10. Dispositif selon la revendication 1, dans lequel la cellule est placée entre une paire de polariseurs croisés.
